(19) Europäisches Patentamt / European Patent Office / Office européen des brevets

(11) EP 2 680 417 A1

(12) EUROPEAN PATENT APPLICATION

(43) Date of publication:
01.01.2014 Bulletin 2014/01

(51) Int Cl.:
H02M 1/42 (2007.01)     H05B 33/08 (2006.01)

(21) Application number: 13275099.3

(22) Date of filing: 25.04.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 28.06.2012 KR 20120070362

(71) Applicant: Samsung Electro-Mechanics Co., Ltd
Suwon, Gyunggi-Do (KR)

(72) Inventors:
• Park, Deuk Hee
Gyunggi-do (KR)

• Lee, Yun Joong
Gyunggi-do (KR)
• Cha, Sang Hyun
Gyunggi-do (KR)
• Lee, Chang Seok
Gyunggi-do (KR)

(74) Representative: Potter Clarkson LLP
The Belgrave Centre
Talbot Street
Nottingham
NG1 5GG (GB)

(54) **Light emitting diode driving apparatus**

(57) There is provided a light emitting diode driving apparatus for controlling the light emitting diode driving according to a feedback signal input through a positive feedback loop, the light emitting diode driving apparatus including: a power converting unit switching input power and supplying driving power to at least one light emitting diode; a feedback unit detecting and feeding back a voltage of the driving power of the power converting unit; and a controlling unit including acomparator having a negative terminal receiving a reference voltage having a set voltage level and a positive terminal receiving the detected voltage from the feedback unit and comparing the reference voltage with the detected voltage to control a switching of the power converting unit according to a comparison result.

FIG. 3

## Description

### CROSS-REFERENCE TO RELATED APPLICATIONS

This application claims the priority of Korean Patent Application No. 10-2012-0070362 filed on June 28, 2012, in the Korean Intellectual Property Office, the disclosure of which is incorporated herein by reference.

### BACKGROUND OF THE INVENTION

### Field of the Invention

The present invention relates to a light emitting diode driving apparatus.

### Description of the Related Art

Recently, interest in and demand for light emitting diodes (LED) have increased.

A device using a light emitting diode may be manufactured to have a compact form, such that it may even be used in a place in which it is difficult to install an existing electronic product. In the case in which the light emitting diode is used as a lighting device, an LED may easily allow for various colors of light to be implemented and luminance to be controlled therein, such that it may be used as a lighting system device appropriate for a situation such as watching films, reading, conferencing, and the like.

In addition, a light emitting diode typically consumes about one eighth of the power consumed by an incandescent lamp, has a lifespan of roughly fifty thousand to one hundred thousand hours, corresponding to 5 to 10 times of that of an incandescent lamp, is environmentally-friendly since it is a mercury free light source, and may be variably designed.

Due to these characteristics, light emitting diode lighting projects have been promoted as governmental projects in many nations such as Korea, the United States, Japan, Australia, and others.

Further, recently, in accordance with the development of flat panel display technology, a flat panel display has been used in an automobile instrument panel as well as in a smart phone, a game machine, and a digital camera. In the future, a range of applications for displays will be greatly increased in terms of devices related to daily human activities, such as a micro-thin television, a transparent navigation device, or the like. Further, in the current display industry, a new technology flat panel display (FPD) market reflecting multimedia requirements such as high resolution, large screens, and the like, has been prominent. Particularly, in the case of the market for large displays, the market share of liquid crystal display (LCD) TVs has rapidly grown, such that it is expected that the LCD TVs will take a leading in the marketplace, in view of a price and marketability.

As a flat panel display, a thin film transistor liquid crystal display (TFT-LCD) is mainly used. A TFT-LCD includes a backlight unit emitting light and mainly uses a cold cathode fluorescent lamp (CCFL) as a back light source. However, recently, a LED has been gradually used due to various advantages in power consumption, effective lifespan, environmental friendliness, and the like. Therefore, a cheap electronic system for a backlight unit power module using LEDs, and an appropriate control element therefor has been urgently demanded.

As described above, the light emitting diode, the use of which has increased, requires a driving apparatus for driving the light emitting diode. As described in the following Related Art Document, in the case of the use of direct current (DC) power, since a circuit supplying the DC power may be relatively complicated, a technology for driving a light emitting diode using rectified power has been developed. However, in this technology, regulation characteristics of current transferred to the light emitting diode are deteriorated.

[Related Art Document]

[Patent Document]

(Patent Document 1) Korean Patent Laid-open Publication No. 2011-0098811

### SUMMARY OF THE INVENTION

An aspect of the present invention provides a light emitting diode driving apparatus for controlling light emitting diode driving according to a feedback signal input through a positive feedback loop.

According to an aspect of the present invention, there is provided a light emitting diode driving apparatus, including: a power converting unit switching input power and supplying driving power to at least one light emitting diode; a feedback unit detecting and feeding back a voltage of the driving power of the power converting unit; and a controlling unit including a comparator having a negative terminal receiving a reference voltage having a set voltage level and a positive terminal receiving the detected voltage from the feedback unit and comparing the reference voltage with the detected voltage to control a switching of the power converting unit according to a comparison result.

The power converting unit may include a switch switching the input power; and a transformer having a primary winding receiving the input power, a secondary winding forming a preset turns ratio between the primary winding and the secondary winding and receiving power induced from the primary winding, and an auxiliary winding forming a preset turns ratio between the secondary winding and the auxiliary winding, receiving power induced from the secondary winding, and transferring the induced power to the feedback unit.

The transformer may have a primary side and a secondary side in which electrical properties of a ground are different, and the primary side is provided with the primary winding and the auxiliary winding and the secondary side is provided with the secondary winding.

The feedback unit may include a diode providing a transfer path for the power from the auxiliary winding; and a voltage-dividing resistor dividing a voltage level of the power from the diode according to a resistance ratio.

The controlling unit may further include an oscillator providing an oscillating voltage; and a controller comparing the comparison result from the comparator with the oscillating voltage of the oscillator to control the switching of the power converting unit.

The light emitting diode driving apparatus may further include a stabilizing unit stabilizing the driving power of the power converting unit and transferring the stabilized driving power to the at least one light emitting diode.

The light emitting diode driving apparatus may further include a rectifying unit rectifying alternating current power to provide the input power to the power converting unit.

The reference voltage may have a preset voltage level.

The reference voltage may have a voltage level varied according to a voltage level of the input power.

The oscillator may provide the oscillating voltage having a preset voltage level.

The oscillator may provide the oscillating voltage having a voltage level varied according to the detected voltage from the feedback unit.

According to another aspect of the present invention, there is provided a light emitting diode driving apparatus, including: a power converting unit switching input power and supplying driving power to at least one light emitting diode; a feedback unit detecting a voltage of the driving power of the power converting unit and feeding back the detected voltage through a preset positive feedback loop; and a controlling unit controlling a switching of the power converting unit according to a comparison result between the detected voltage from the feedback unit and a reference voltage having a set voltage level.

The controlling unit may include a comparator having a negative terminal receiving a reference voltage and a positive terminal receiving the detected voltage from the feedback unit and comparing the reference voltage with the detected voltage; an oscillator providing an oscillating voltage; and a controller comparing a comparison result from the comparator with the oscillating voltage of the oscillator to control the switching of the power converting unit.

**BRIEF DESCRIPTION OF THE DRAWINGS**

The above and other aspects, features and other advantages of the present invention will be more clearly understood from the following detailed description taken in conjunction with the accompanying drawings, in which:

FIG. 1 is a circuit diagram schematically showing a light emitting diode driving apparatus according to an embodiment of the present invention;
FIG. 2 is a graph showing operation waveforms of main units of the light emitting diode driving apparatus according to the embodiment of the present invention;
FIG. 3 is a circuit diagram schematically showing a light emitting diode driving apparatus according to another embodiment of the present invention; and
FIG. 4 is a circuit diagram schematically showing a light emitting diode driving apparatus according to another embodiment of the present invention.

**DETAILED DESCRIPTION OF THE INVENTION**

Hereinafter, embodiments will be described in detail with reference to the accompanying drawings so that they can be easily practiced by those skilled in the art to which the present invention pertains.

However, in describing embodiments of the present invention, detailed descriptions of well-known functions or constructions will be omitted so as not to obscure the description of the present invention with unnecessary detail.

In addition, like or similar reference numerals denote parts performing similar functions and actions throughout the drawings.

A case in which any one part is connected with the other part includes a case in which the parts are directly connected with each other and a case in which the parts are indirectly connected with each other with other elements interposed therebetween.

In addition, unless explicitly described otherwise, "comprising" any components will be understood to imply the inclusion of other components but not the exclusion of any other components.

Embodiments of the present invention will now be described in detail with reference to the accompanying drawings.

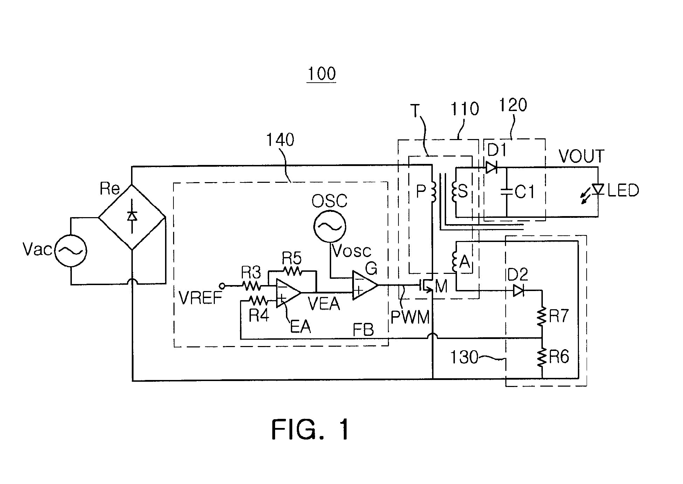

FIG. 1 is a circuit diagram schematically showing a light emitting diode driving apparatus according to an embodiment of the present invention.

Referring to FIG. 1, a light emitting diode driving apparatus 100 according to the embodiment of the present invention may include a power converting unit 110, a feedback unit 130, a controlling unit controlling unit 140, and a stabilizing unit 120. In addition, the light emitting diode apparatus 100 according to the embodiment of the present invention may further include a rectifying unit Re rectifying input alternating current (AC) power Vac to direct current (DC) power and providing the rectified power to the power converting unit 110.

The power converting unit 110 may include a switch M switching the DC power input thereto and a transformer T inducing the switched DC power and outputting the induced power.

The switch M may switch the DC power according to a control of the controlling unit 120. More particularly, the switch M may switch the DC power input to a primary winding P of the transformer T. To this end, the switch M may be connected between one end of the primary winding P and a ground, and the primary winding P may have the DC power input to the other end thereof.

The transformer T may include the primary winding P, a secondary winding S and an auxiliary winding A.

The transformer T may have a primary side and a secondary side in which electrical properties of the ground are different. Here, the primary side may be provided with the primary winding P and the auxiliary winding A, and the secondary side may be provided with the secondary winding S.

The respective primary winding P, the secondary winding S, and the auxiliary winding A may have preset turn numbers, and the primary winding P and the secondary winding S form a turns ratio preset therebetween, such that the DC power input to the primary winding P may be induced to the secondary winding S according to the turns ratio through switching of the switch M.

The power that is induced to the secondary winding S may be stabilized through a diode D1 and a capacitor C1 of the stabilizing unit 120 to thereby allow for driving power VOUT to be supplied to at least one light emitting diode LED. In addition, a plurality of light emitting diodes LEDs may be provided.

The auxiliary winding A may form a preset turns ratio with the secondary winding S to receive the power induced to the secondary winding S, thereby enabling the power induced to the secondary winding S according to the turns ratio to be detected.

The power detected by the auxiliary winding A may be transferred to the controlling unit 140 through the feedback unit 130.

The feedback unit 130 may transfer a detected voltage FB to the controlling unit 140 through a diode D2 and voltage-dividing resistors R6 and R7.

More specifically, the diode D2 may form a transfer path for the power that is received to the auxiliary winding A, and the voltage-dividing resistors R6 and R7 may divide a voltage level of the power transferred through the diode D2 according to a resistance ratio to transfer the detected voltage FB to the controlling unit 140. Here, the detected voltage FB may be transferred to the controlling unit 140 through a preset positive feedback loop. The positive feedback loop as mentioned above may mean a feedback transfer path through which the detected voltage FB is input to a positive terminal (+) of a comparator EA.

The controlling unit 140 may include the comparator EA, an oscillator OSC, and a controller G.

The comparator EA has a positive terminal (+) and a negative terminal (-) and compares voltage levels of signals input to the positive terminal (+) and the negative terminal (-) with each other to output a comparison result VEA, and the positive terminal (+) may receive the detected voltage FB from the feedback unit 130, while the negative terminal (-) may receive a reference voltage VREF having a preset voltage level. The comparator EA may compare the detected voltage FB with the reference voltage VREF to transfer the comparison result VEA to the controller G.

The oscillator OSC may provide a preset oscillating signal Vosc to the controller G, and the controller G may compare the oscillating signal Vosc of the oscillator OSC with the comparison result VEA of the comparator EA to control switching on/off of the switch M. More specifically, the controller G may have a positive terminal (+) and a negative terminal (-), and the positive terminal (+) may receive the comparison result VEA of the comparator EA, while the negative terminal (-) may receive the oscillating signal Vosc of the oscillator OSC. The controller G may control the switching on/off of the switch to control an output level of the driving power VOUT.

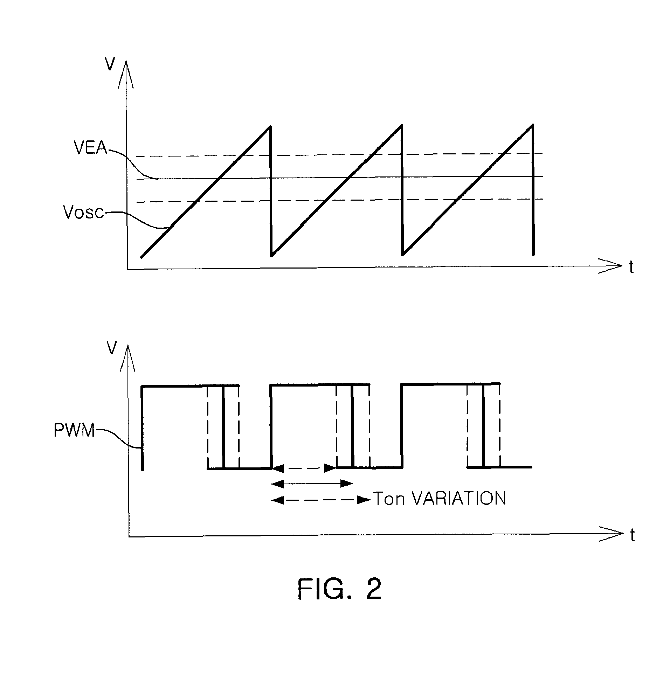

FIG. 2 is a graph showing an operation waveform of main units of the light emitting diode driving apparatus according to the embodiment of the present invention.

An operation of the light emitting diode driving apparatus 100 according to the embodiment of the present invention will be described with reference to FIGS. 1 and 2. As shown in FIG. 2, the oscillating signal Vosc of the oscillator OSC may be a signal having a sawtooth wave shape and may be compared with the comparison result VEA, such that a gate signal PWM switching on/off the switch M may be provided.

More specifically, in general, when a voltage level of the driving power VOUT supplied to the light emitting diode LED is increased, a current flowing in the light emitting diode LED may be decreased. However, according to the embodiment of the present invention, as the voltage level of the driving power VOUT is increased, the detected voltage FB is increased, the voltage level of the comparison result VEA of the comparator EA is increased, and a switching-on duty of the switch M is increased by a control of the controller G, such that the current flowing in the light emitting diode LED may be increased.

Conversely, in general, when the voltage level of the driving power VOUT is decreased, the current flowing in the light emitting diode LED may be increased. However, according to the present invention, as the voltage level of the driving power VOUT is decreased, the detected voltage FB is decreased, the voltage level of the comparison result VEA of the comparator EA is decreased, and the switching-on duty of the switch M is decreased by the control of the controller G, such that the current flowing in the light emitting diode LED may be decreased. Therefore, a load regulation performance for constantly maintaining the current in the light emitting diode LED may be improved.

Here, a relationship between an input voltage and an output voltage may be represented by the following equation.

$$[0051] \quad \text{(Equation)} \quad Vout=(A/(1-BA))*Vin$$

Wherein Vout is the output voltage, A is a gain of the comparator EA, and B is a feedback factor which is a ratio in which the voltage is divided by the voltage resistors R6 and R7 (a ratio in which the voltage is feedback).

Here, in order to stably operate the comparator EA, it is required that 1>>BA.

The voltage level of the driving power VOUT supplied to the light emitting diode LED as described above may be increased or decreased, depending on the light emitting diode LED corresponding to a load of the driving power VOUT. Particularly, in the case in which a plurality of light emitting diodes LEDs are provided, the voltage level of the driving power VOUT may be increased when a voltage level of a reference voltage at which each of the plurality of light emitting diodes LEDs emits light is increased, while the voltage level of the driving power VOUT may be decreased when the voltage level of the reference voltage is decreased.

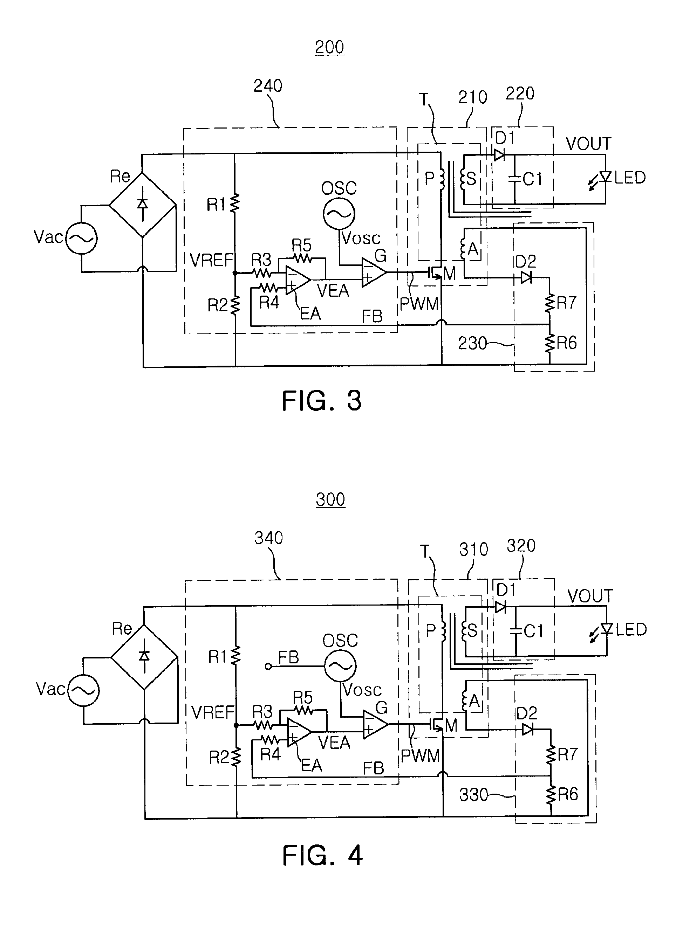

FIG. 3 is a circuit diagram schematically showing a light emitting diode driving apparatus according to another embodiment of the present invention.

Referring to FIG. 3, a light emitting diode driving apparatus 200 according to the another embodiment of the present invention is different from the light emitting diode driving apparatus 100 according to the embodiment of the present invention as shown in FIG. 1 in that the reference voltage VREF input to the negative terminal (-) of the comparator EA in a controlling unit 240 may be formed by reflecting a voltage level of input power from the rectifying unit Re therein, to improve a line regulation performance.

That is, when the input power is increased, the voltage level of the comparison result VEA of the comparator EA is decreased and the switching-on duty of the switch M is decreased, such that the current flowing in the light emitting diode LED may be decreased. Conversely, when the input power is decreased, the voltage level of the comparison result VEA of the comparator EA is increased and the switching-on duty of the switch M is increased, such that the current flowing in the light emitting diode LED may be increased.

In order to reflect the voltage level of the input power from the rectifying unit Re in the reference voltage VREF, the controlling unit 240 may include input voltage-dividing resistors R1 and R2 to divide the voltage level of the input power, thereby forming the voltage level of the reference voltage VREF.

Configurations and operations of a power converting unit 210, a stabilizing unit 220, and a feedback unit 230 of the light emitting diode driving apparatus 200 according to another embodiment of the present invention are the same as and similar to those of the power converting unit 110, the stabilizing unit 120 and the feedback unit 130 of the light emitting driving apparatus 100 according to the embodiment of the present invention as shown in FIG. 1. Therefore, a detailed description thereof will be omitted.

FIG. 4 is a circuit diagram schematically showing a light emitting diode driving apparatus according to another embodiment of the present invention.

Referring to FIG. 4, a light emitting diode driving apparatus 300 according to another embodiment of the present invention is different from the light emitting diode driving apparatus 100 according to the embodiment of the present invention as shown in FIG. 1 in that the oscillating signal Vosc of the oscillator OSC in a controlling unit 340 may be formed by reflecting a variation in a voltage level of the detected voltage FB therein, to further improve a load regulation performance.

That is, when a voltage level of the driving power VOUT supplied to the light emitting diode LED is increased, the detected voltage FB is increased, a voltage level of the comparison result VEA of the comparator EA is increased, and the switching-on duty of the switch M according the control of the controller G and a switching frequency according to an increase in a signal level of the oscillating signal Vosc are increased, such that the current flowing in the light emitting diode LED may be increased.

Conversely, when the voltage level of the driving power VOUT is decreased, the detected voltage FB is decreased, the voltage level of the comparison result VEA of the comparator EA is decreased, and the switching-on duty of the switch M according the control of the controller G and a switching frequency according to a decrease in a signal level of the oscillating signal Vosc are decreased, such that the current flowing in the light emitting diode LED may be increased.

Here, the voltage level of the driving power VOUT supplied to the light emitting diode LED as mentioned above may be increased or decreased depending on the light emitting diodes LED corresponding to a load of the driving power VOUT. Particularly, in the case in which a plurality of light emitting diode LEDs are provided, the voltage level of the driving power VOUT may be increased when a voltage level of the reference voltage at which each of the plurality of light emitting diodes LEDs emits light is increased, and the voltage level of the driving power VOUT may be decreased when the voltage level of the reference voltage is decreased.

Configurations and operations of a power converting unit 310, a stabilizing unit 320, and a feedback unit 330 of the light emitting diode driving apparatus 300 according to another embodiment of the present invention are the same as and similar to those of the power converting unit 110, the stabilizing unit 120 and the feedback unit 130 of the light emitting driving apparatus 100 according to the embodiment of the present invention as shown in FIG. 1. Therefore, a detailed description thereof will be omitted.

As set for the above, according to the embodiments of the present invention, in driving a plurality of light emitting diodes having different driving voltages, the driving of the light emitting diode can be controlled according to the feedback signal input through the positive feedback loop, whereby the current flowing in the light emitting diode can be constantly maintained.

While the present invention has been shown and described in connection with the embodiments, it will be apparent to those skilled in the art that modifications and variations can be made without departing from the spirit and scope of the invention as defined by the appended claims.

**Claims**

1. A light emitting diode driving apparatus, comprising:

   a power converting unit switching input power and supplying driving power to at least one light emitting diode;
   a feedback unit detecting and feeding back a voltage of the driving power of the power converting unit; and
   a controlling unit including a comparator having a negative terminal receiving a reference voltage having a set voltage level and a positive terminal receiving the detected voltage from the feedback unit and comparing the reference voltage with the detected voltage to control a switching of the power converting unit according to a comparison result.

2. The light emitting diode driving apparatus of claim 1, wherein the power converting unit includes,
   a switch switching the input power; and
   a transformer having a primary winding receiving the input power, a secondary winding forming a preset turns ratio between the primary winding and the secondary winding and receiving power induced from the primary winding, and an auxiliary winding forming a preset turns ratio between the secondary winding and the auxiliary winding, receiving power induced from the secondary winding, and transferring the induced power to the feedback unit.

3. The light emitting diode driving apparatus of claim 2, wherein the transformer includes a primary side and a secondary side in which electrical properties of a ground are different, and
   the primary side is provided with the primary winding and the auxiliary winding and the secondary side is provided with the secondary winding.

4. The light emitting diode driving apparatus of claim 2, wherein the feedback unit includes
   a diode providing a transfer path for the power from the auxiliary winding; and
   a voltage-dividing resistor dividing a voltage level of the power from the diode according to a resistance ratio.

**5.** The light emitting diode driving apparatus of claim 1, wherein the controlling unit further includes:

an oscillator providing an oscillating voltage; and
a controller comparing the comparison result from the comparator with the oscillating voltage of the oscillator to control the switching of the power converting unit.

**6.** The light emitting diode driving apparatus of claim 1, further comprising a stabilizing unit stabilizing the driving power of the power converting unit and transferring the stabilized driving power to the at least one light emitting diode.

**7.** The light emitting diode driving apparatus of claim 1, wherein the reference voltage has a voltage level varied according to a voltage level of the input power.

**8.** The light emitting diode driving apparatus of claim 5, wherein the oscillator provides the oscillating voltage having a preset voltage level.

**9.** The light emitting diode driving apparatus of claim 5, wherein the oscillator provides the oscillating voltage having a voltage level varied according to the detected voltage from the feedback unit.

**10.** A light emitting diode driving apparatus, comprising:

a power converting unit switching input power and supplying driving power to at least one light emitting diode;
a feedback unit detecting a voltage of the driving power of the power converting unit and feeding back the detected voltage through a preset positive feedback loop; and
a controlling unit controlling a switching of the power converting unit according to a comparison result between the detected voltage from the feedback unit and a reference voltage having a set voltage level.

**11.** The light emitting diode driving apparatus of claim 10, wherein the power converting unit includes
a switch switching the input power; and
a transformer having a primary winding receiving the input power, a secondary winding forming a preset turns ratio between the primary winding and the secondary winding and receiving power induced from the primary winding, and an auxiliary winding forming a preset turns ratio between the secondary winding and the auxiliary winding, receiving power induced from the secondary winding, and transferring the induced power to the feedback unit.

**12.** The light emitting diode driving apparatus of claim 11, wherein the feedback unit includes:

a diode providing a transfer path for the power from the auxiliary winding; and
a voltage-dividing resistor dividing a voltage level of the power from the diode according to a resistance ratio.

**13.** The light emitting diode driving apparatus of claim 10, wherein the controlling unit includes:

a comparator having a negative terminal receiving a reference voltage and a positive terminal receiving the detected voltage from the feedback unit and comparing the reference voltage with the detected voltage;
an oscillator providing an oscillating voltage; and
a controller comparing a comparison result from the comparator with the oscillating voltage of the oscillator to control the switching of the power converting unit.

**14.** The light emitting diode driving apparatus of claim 10, wherein the reference voltage has a preset voltage level.

**15.** The light emitting diode driving apparatus of claim 10, wherein the reference voltage has a voltage level varied according to a voltage level of the input power.

FIG. 1

FIG. 2

FIG. 3

FIG. 4

# EP 2 680 417 A1

**EUROPEAN SEARCH REPORT**

European Patent Office — Europäisches Patentamt — European Patent Office — Office européen des brevets

**Application Number**

EP 13 27 5099

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 102 355 134 A (CHENGDU MONOLITHIC POWER SYSTEMS CO LTD) 15 February 2012 (2012-02-15) * figure 4 * & US 2013/077353 A1 (KUANG NAIXING [CN] ET AL) 28 March 2013 (2013-03-28) ----- | 1-3,6, 10,11,14 | INV. H02M1/42 H05B33/08 |
| A | US 2011/025225 A1 (HORIUCHI FUMIO [JP] ET AL) 3 February 2011 (2011-02-03) * figures 1,2 * ----- | 1-15 | |
| A | US 2012/056551 A1 (ZHU SHIHAI [CN] ET AL) 8 March 2012 (2012-03-08) * figure 1 * ----- | 1-15 | |

|  |
|---|
| **TECHNICAL FIELDS SEARCHED (IPC)** |
| H02M H05B |

The present search report has been drawn up for all claims

| Place of search | Date of completion of the search | Examiner |
|---|---|---|
| Munich | 5 November 2013 | Boudet, Joachim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 13 27 5099

This annex lists the patent family members relating to the patent documents cited in the above-mentioned European search report.
The members are as contained in the European Patent Office EDP file on
The European Patent Office is in no way liable for these particulars which are merely given for the purpose of information.

05-11-2013

| Patent document cited in search report | | Publication date | Patent family member(s) | | Publication date |
|---|---|---|---|---|---|
| CN 102355134 | A | 15-02-2012 | CN | 102355134 A | 15-02-2012 |
| | | | TW | 201325046 A | 16-06-2013 |
| | | | US | 2013077353 A1 | 28-03-2013 |
| US 2011025225 | A1 | 03-02-2011 | CN | 101990342 A | 23-03-2011 |
| | | | JP | 2011035112 A | 17-02-2011 |
| | | | US | 2011025225 A1 | 03-02-2011 |
| US 2012056551 | A1 | 08-03-2012 | CN | 101951177 A | 19-01-2011 |
| | | | US | 2012056551 A1 | 08-03-2012 |

EPO FORM P0459

For more details about this annex : see Official Journal of the European Patent Office, No. 12/82

**EP 2 680 417 A1**

## REFERENCES CITED IN THE DESCRIPTION

**Patent documents cited in the description**

- KR 1020120070362

- KR 20110098811